# EUROPÄISCHE PATENTSCHRIFT

(11) **EP 3 959 953 B1**
(45) Veröffentlichungstag und Bekanntmachung des Hinweises auf die Patenterteilung: **28.02.2024**
(21) Anmeldenummer: 21193492.2
(22) Anmeldetag: 27.08.2021
(51) Int. Cl.: A01B 15/06, A01B 35/22

(54) **GRUBBERSCHAR**
CULTIVATOR TINE
SOCS DE CULTIVATEUR

(30) Priorität: 28.08.2020 DE 202020104979 U
(43) Veröffentlichungstag der Anmeldung: 02.03.2022
(73) Patentinhaber: Treffler Maschinenbau GmbH & Co. KG, 86554 Pöttmes-Echsheim (DE)
(72) Erfinder: Treffler, Paul, 86554 Pöttmes-Echsheim (DE)
(74) Vertreter: TBK

(56) Entgegenhaltungen:
- EP-A1- 3 837 934
- DE-A1-102006 031 243
- DE-A1-102013 102 420
- DE-B4-102009 029 894
- RU-C1- 2 206 190
- US-A1- 2019 230 838

## Beschreibung

### Technisches Gebiet

Die vorliegende Offenbarung betrifft eine Grubberschar.

### Stand der Technik

In dem Stand der Technik ist ein Grubberschar als ein landwirtschaftliches Gerät zur nichtwendenden Bodenbearbeitung bekannt, das zur Lockerung und Krümelung des Bodens sowie zur Unkrautbekämpfung und Einarbeitung von humosen Materialien in den Boden eingesetzt wird.

US 2019/230838 A1 zeigt eine Grubberschar entsprechend der Präambel des Patentanspruchs 1 der vorliegenden Erfindung. Weitere konventionelle Grubberschare sind in DE 10 2013 102420 A1, DE 10 2006 031243 A1 und RU 2 206 190 C1 gezeigt.

### Zusammenfassung der Erfindung

Der Erfindung liegt die Aufgabe zugrunde, ein Grubberschar bereitzustellen, das eine verbesserte Unkrautbekämpfung ermöglicht.

Diese Aufgabe wird durch ein Grubberschar gemäß Anspruch 1 erreicht. Vorteilhafte Weiterbildungen sind Gegenstand der Unteransprüche.

Ein erfindungsgemäßes Grubberschar weist einen Grundkörper mit einem nach unten hin abfallenden und in Bodenbearbeitungsrichtung vorstehenden Keilbereich, der in Bodenbearbeitungsrichtung am vorderen Ende des Grundkörpers angeordnet ist, wobei der Keilbereich einen mittigen Bereich und einen seitlichen Bereich hat, der in einer Querrichtung, die senkrecht zur Bodenbearbeitungsrichtung ist, seitlich von dem mittigen Bereich angeordnet ist, Hartmetallplättchen, die auf dem seitlichen Bereich des Keilbereichs befestigt sind und eine Schnittkante haben, und eine Hartmetallspitze auf, die auf dem mittigen Bereich des Keilbereichs befestigt ist und in Querrichtung mittig zur Bodenbearbeitungsrichtung hin spitz zuläuft.

Da bei der Bodenbearbeitung die Vorderseite des Grubberschars in Bearbeitungsrichtung der höchsten Belastung und dem höchsten Verschleiß ausgesetzt sind, wird bei dem erfindungsgemäßen Grubberschar dieser Bereich mit Hartmetallelementen versehen, d.h. Hartmetallplättchen für seitliche Schnittflächen und eine Hartmetallspitze für den in Bearbeitungsrichtung vordersten Teil des Schars.

Die Hartmetallspitze zeichnet sich dadurch aus, dass sie nicht lediglich an der Spitze des Schars vorgesehen ist, sondern dadurch, dass sie zur Bodenbearbeitungsrichtung hin spitz zuläuft. Im Gegensatz zu Scharen, die eine in Querrichtung gerade verlaufende "Spitze" haben, hat das erfindungsgemäße Schar den Vorteil, dass bereits beim ersten Kontakt des Unkrauts mit dem Schar ein seitliches Ableiten vonstattengeht. Mit anderen Worten gesagt besteht kein Problem damit, dass die mit der "Spitze" in Kontakt kommenden Pflanzen sich über die Spitze legen und ein weiteres Arbeiten behindern, wie dies bei flachen Spitzen mit in Querrichtung gerade verlaufender Vorderkante der Fall sein kann.

Erfindungsgemäß hat die Hartmetallspitze auf beiden Seiten in der Querrichtung hinsichtlich einer Spitze Schnittkanten. Aufgrund dieser Ausgestaltung ist es zusätzlich zum seitlichen Ableiten möglich, bereits an der Spitze des Schars mit dem Schneiden des Unkrauts zu beginnen. Somit wird die effektive Schnittbreite im Vergleich zur Gesamtbreite des Schars vergrößert und optimiert. Das Grubberschar ist eine Gänsefußschar.

Die Spitze und/oder die Schnittkanten der Hartmetallspitze in einer Tiefenrichtung, die senkrecht zur Bodenbearbeitungsrichtung und senkrecht zur Querrichtung ist, kann weiter entfernt sein von Befestigungsstellen der Grubberschar als die Schnittkanten der Hartmetallplättchen auf dem seitlichen Bereich des Keilbereichs. Die Tiefenrichtung entspricht im Betrieb der Richtung, die auf den Boden zu gerichtet ist, und entspricht im Wesentlichen der Schwerkraftrichtung. Dementsprechend können Spitze und/oder die Schnittkanten der Hartmetallspitze über die unterste Stelle der Schnittkanten der Hartmetallplättchen hinaus nach unten hin vorstehen. In Anbetracht dieser Ausgestaltung ist es möglich, das Einzugsverhalten des Schars zu verbessern, da die Hartmetallspitze im Betrieb weiter in den Boden hineinreicht als die Hartmetallplättchen. Dadurch liegt an der Spitze ein höherer Erddruck an, was ein sicheres Arbeitsverhalten gewährleistet.

Ferner kann die in der Tiefenrichtung bzw. Schwerkraftrichtung am weitesten von Befestigungsstellen der Grubberschar entfernte Kante des mittigen Bereichs des Keilbereichs in der Tiefenrichtung bzw. Schwerkraftrichtung weiter entfernt sein von den Befestigungsstellen der Grubberschar als die in der Tiefenrichtung am weitesten von Befestigungsstellen der Grubberschar entfernte Kante des seitlichen Bereichs des Keilbereichs. Mit anderen Worten kann die unterste Kante des mittigen Bereichs des Keilbereichs unterhalb der untersten Kante des seitlichen Bereichs des Keilbereichs in der Schwerkraftrichtung liegen, wenn das Schar betriebsbereit installiert ist, wobei der mittige Bereich und der seitliche Bereich des Keilbereichs die vordersten Abschnitte des Grundkörpers sind. Auch hier gilt, dass es gemäß dieser Ausgestaltung möglich ist, das Einzugsverhalten des Schars zu verbessern, da der mittige Bereich des Keilbereichs im Betrieb weiter in den Boden hineinreicht als der seitliche Beriech des Keilbereichs. Dadurch liegt an der Spitze ein höherer Erddruck an, was ein sicheres Arbeitsverhalten gewährleistet.

Wenn sowohl die Hartmetallspitze als auch der mittige Bereich des Keilbereichs jeweils weiter nach unten vorstehen als die Hartmetallplättchen und der seitliche Bereich des Keilbereichs, dann ist vorteilhaft gewährleistet, dass die Hartmetallelemente ausreichend gestützt werden, um dem Arbeitsdruck zu widerstehen.

Die Schnittkanten der Hartmetallplättchen in der Tiefenrichtung können teilweise oder in Gänze weiter entfernt sein von den Befestigungsstellen der Grubberschar als die in der Tiefenrichtung am weitesten von Befestigungsstellen der Grubberschar entfernte Kante des seitlichen Bereichs des Keilbereichs, und/oder die Schnittkanten der Hartmetallspitze in der Tiefenrichtung können teilweise oder in Gänze weiter entfernt sein von den Befestigungsstellen der Grubberschar als die in der Tiefenrichtung am weitesten von Befestigungsstellen der Grubberschar entfernte Kante des mittigen Bereichs des Keilbereichs. Indem die Schnittkanten der Hartmetallplättchen bzw. der Hartmetallspitze tiefer reichen als die dahinterliegenden stützenden Keilbereiche des Grundkörpers, wird eine Schnittgeometrie erreicht, die jener überlegen ist, die erreicht werden kann durch eine Schnittgeometrie, bei der die Schnittkanten überhalb des unteren Endes des Keilbereichs enden. Wenn die Schnittkanten der Hartmetallelemente, die in Schwerkraftrichtung (Tiefenrichtung) unten an den Hartmetallelementen vorgesehen sind, unterhalb der unteren (Vorder-)Kanten der Keilbereiche enden, ist das schneidende Element (lediglich Hartmetallelement) dünner als wenn das schneidende Element sowohl Hartmetallelement(e) als auch den Keilbereich des Grundkörpers beinhaltet. Somit kann ein Schneiden deutlich einfacher und präziser durchgeführt werden. Außerdem, wenn die Schnittkanten der Hartmetallelemente unterhalb der unteren (Vorder-)Kanten der Keilbereiche enden, entsteht in Bodenbearbeitungsrichtung hinter den Schnittkanten der Hartmetallelemente ein Freiraum, in den der bearbeitete Boden ausweichen kann. Dementsprechend wird die erforderliche Bearbeitungskraft reduziert.

Ferner kann eine Schnittfläche der Grubberschar in einer Ebene XZ, die senkrecht zur Querrichtung ist und die Spitze der Hartmetallspitze beinhaltet, im Bereich des mittigen Bereichs des Keilbereichs einen Knick aufweisen, sodass sich die darauf angebrachte Hartmetallspitze stärker zur Tiefenrichtung hin neigt als ein Teil der Schnittfläche, der entgegen der Bodenbearbeitungsrichtung benachbart zu dem mittigen Bereich des Keilbereichs liegt. Mit anderen Worten ist der vordere Teil des Schars - vorzugsweise der Teil, auf dem die Hartmetallspitze sitzt - stärker zum Boden hin geneigt als der Teil des Schars, der sich nach hinten hin dem vorderen Teil anschließt. Der "Knick" kann auch mit einem Übergangsradius ausgebildet sein. Wenn der Anstellwinkel der Hartmetallspitze (Winkel gegenüber der Bodenoberfläche) steiler wird, wird das Einzugsverhalten verbessert und die Schneidefähigkeit der Hartmetallspitze reduziert. Ein Anstellwinkel in einem Bereich von 30° bis 45° gegenüber der Bodenoberfläche erreicht gute Ergebnisse sowohl beim Einzugsverhalten als auch bei der Schneidefähigkeit.

Ferner kann der mittige Bereich des Keilbereichs zum Inneren des Grundkörpers hin einen abgestuften Bereich ausbilden, sodass die Hartmetallspitze im Wesentlichen bündig in dem abgestuften Bereich aufgenommen wird. Dadurch wird erreicht, dass auf der Oberseite des Schars ein Hindernis in Form einer zusätzlichen Stufe vermieden wird. Darüber hinaus wird die Hartmetallspitze an seiner hinteren Seite gestützt, wodurch die Last auf die Verbindung zwischen Hartmetallspitze und Grundkörper (Keilbereich) reduziert werden kann. Dies vergrößert entsprechend die Lebensdauer des Schars.

Ferner kann eine Breite der Hartmetallspitze in Querrichtung kleiner sein als eine Breite des Grundkörpers im Bereich der Befestigungsstellen. Besonders wünschenswert ist es, dass die Breite der Hartmetallspitze in Querrichtung kleiner als oder gleich wie eine halbe Breite des Grundkörpers im Bereich der Befestigungsstellen ist. Eine entsprechende Breite der Hartmetallspitze wird als ausreichend angesehen, um das Einzugsverhalten optimal zu gestalten. Dementsprechend bleibt eine größere Restbreite für durchgehende Schnittkanten der Hartmetallplättchen zur Verfügung, um ein gutes Schnittergebnis zu erreichen. Der mittige Bereich und der seitliche Bereich können in der Querrichtung betrachtet mit der Bodenbearbeitungsrichtung einen spitzen Winkel einschließen. Dies ist förderlich für ein geeignetes Einzugsverhalten.

Ferner kann der seitliche Bereich bezüglich des mittigen Bereichs entgegen der Bodenbearbeitungsrichtung nach hinten versetzt angeordnet sein. Dadurch wird eine verbesserte Zugschärfe erreicht, da hier die Pflanze auf die dreieckige Schar trifft und nach links oder rechts an dem Metall entlang streift. Durch den Versatz wird die Pflanze, die nach links oder rechts abgelenkt wurde, in ihrer Verschüttung etwas aufgelockert und die Hartmetallplättchen können in diesem Fall mit Druck- und Zugschärfe die Pflanze noch besser schneiden.

### Kurze Beschreibung der Zeichnungen

Fig. 1 ist eine Draufsicht auf ein Grubberschar gemäß einer Ausführungsform der Erfindung.
Fig. 2 ist eine Vorderansicht auf das Grubberschar gemäß der Ausführungsform der Erfindung.
Fig. 3 ist eine Seitenansicht auf das Grubberschar gemäß der Ausführungsform der Erfindung.
Fig. 4 ist eine perspektivische Ansicht auf das Grubberschar gemäß der Ausführungsform der Erfindung.
Fig. 5 ist eine Schnittansicht auf das Grubberschar gemäß der Ausführungsform der Erfindung entlang einer Linie A-A, die in Fig. 2 gezeigt ist.
Fig. 6 zeigt eine vergrößerte Ansicht des Details B, das in Fig. 5 vermerkt ist.

### Detaillierte Beschreibung der Ausführungsform

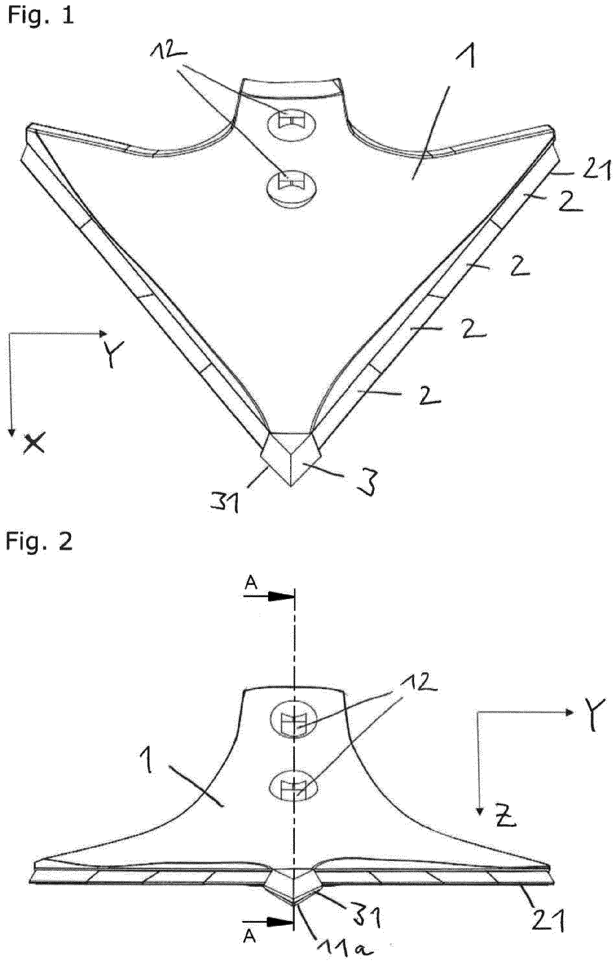

Fig. 1 zeigt das bzw. eine dreieckige Schar in einer Draufsicht. In dieser Ansicht lässt sich gut erkennen, dass die Schar pfeilförmig ausgebildet ist. In Richtung der Bodenbearbeitungsrichtung X läuft ein Grundkörper 1 pfeilförmig zusammen. An den in Bodenbearbeitungsrichtung X vorne liegenden Rändern des Grundkörpers 1 sind Hartmetallelemente 2, 3 angebracht.

Hartmetallplättchen 2 sind an den geraden Kanten an der Vorderseite des Grundkörpers 1 angebracht. In der vorliegenden Ausführungsform sind die Hartmetallplättchen 2 formschlüssig nebeneinander vorgesehen, um so eine durchgehende Schnittkante auf einer rechten und linken Seite des Grundkörpers zu erzeugen. An der Spitze des Grundkörpers 1 ist eine Hartmetallspitze 3 vorgesehen. Diese Hartmetallspitze 3 bildet nicht nur die Spitze des Schars, sondern ist auch selbst mit einer spitz zulaufenden Form ausgebildet. Dadurch ist gewährleistet, dass unabhängig von der Tiefe der Schar aus Bodenbearbeitungsrichtung kommende Unkrautpflanzen direkt zur linken oder rechten Seite der Schar abgelenkt werden. Da die Hartmetallspitze 3 in der Querrichtung Y nur eine geringe Breite aufweist, muss die Hartmetallspitze 3 grundsätzlich keine Schnittkante 31 an den vorderen Kanten der Hartmetallspitze 3 aufweisen, die in der Bodenbearbeitungsrichtung die vordersten Kanten der Hartmetallspitze 3 bilden. Dem ist so, da die Hartmetallspitze in der Lage ist, die in Kontakt tretenden Unkrautpflanzen geringfügig zu den Seiten hin auszulenken, und die Unkrautpflanzen werden dann mit den Schnittkanten 21 der Hartmetallplättchen 2 seitlich neben der Hartmetallspitze 3 abgeschnitten. In der vorliegenden Ausführungsform ist jedoch die Hartmetallspitze 3 mit zwei seitlichen Schnittkanten 31 versehen, die bereits an der Spitze der Schar ein Schneiden der Unkrautpflanzen durchführen bzw. beginnen können.

Fig. 2 zeigt eine Vorderansicht der Schar. Die Schar ist an deren oberen Teil mit zwei Befestigungsstellen 12 versehen, die in einer Tiefenrichtung Z sowie der Bodenbearbeitungsrichtung X voneinander beabstandet sind. In Querrichtung Y ist kein Versatz vorgesehen. In der vorliegenden Ausführungsform ist die Spitze der Hartmetallspitze 3 sowie die Schnittkanten 31 der Hartmetallspitze 3 in Tiefenrichtung Z weiter von den Befestigungsstellen 12 entfernt als die Schnittkanten 21 der Hartmetallplättchen 2. Aufgrund dieser Anordnung wird es möglich, dass ein Absenken der Schar in Tiefenrichtung erreicht wird, um in den Boden einzudringen, wobei die Hartmetallspitze 3 zuerst den Boden berührt. Dadurch erfährt die Hartmetallspitze 3 zuerst einen Bodengegendruck bzw. Erddruck, der die Schar mit der Hartmetallspitze 3 voraus in den Boden eintauchen lässt.

Aus Fig. 2 heraus ist auch ersichtlich, dass die Schnittkanten 31 der Hartmetallspitze 3 zur Bodenbearbeitungsrichtung X hin zunehmend tiefer verlaufen, so dass die Spitze der Hartmetallspitze 3 den tiefsten Punkt (in Tiefenrichtung Z) bilden kann.

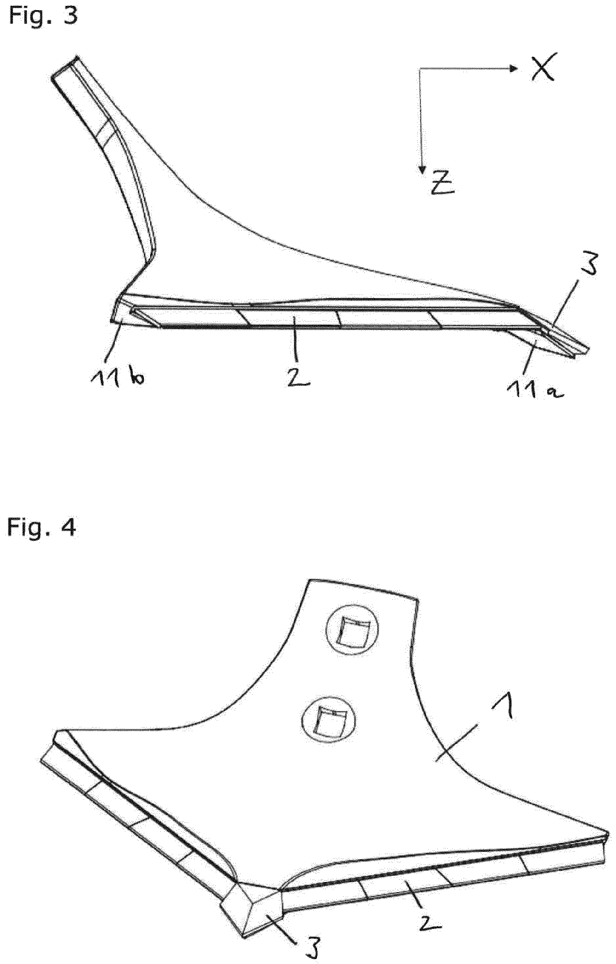

Fig. 3 zeigt die Schar in einer Seitenansicht. In dieser Ansicht ist klar ersichtlich, dass die Hartmetallplättchen 2 auf einem seitlichen Bereich 11b eines Keilbereichs 11 befestigt sind. Die Hartmetallspitze 3 ist auf einem mittigen Bereich 11a des Keilbereichs 11 des Grundkörpers 1 befestigt. Der Keilbereich 11 besteht aus dem mittigen Bereich 11a und zwei seitlichen Bereichen 11b, die sich jeweils rechts und links hinsichtlich der Bodenbearbeitungsrichtung X neben dem mittigen Bereich 11a erstrecken.

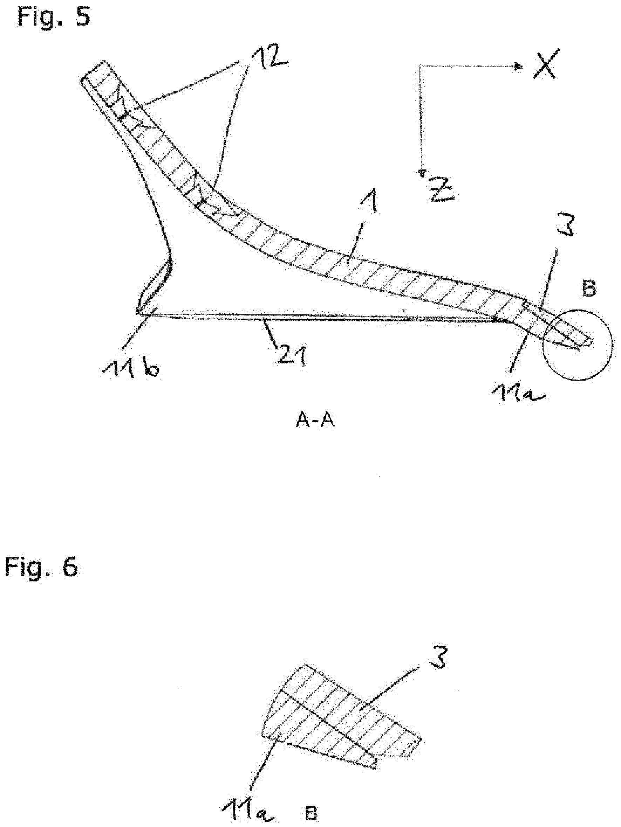

In der vorliegenden Ausführungsform sind die Hartmetallelemente 2, 3 nach dem Auflöten auf den Grundkörper 1 auf 50 +/- 2 HRC gehärtet. Aus Fig. 3 heraus ist außerdem ersichtlich, dass die Hartmetallplättchen 2 derart auf dem seitlichen Bereich 11b des Keilbereichs 11 aufliegen, dass sie an deren oberen Ende durch eine Stufe, die in dem Keilbereich 11 des Grundkörpers 1 ausgebildet ist, abgestützt werden. Dies gilt gleichermaßen für die Hartmetallspitze 3, wie aus Fig. 5 klar ersichtlich ist. Durch diese Stufenbildung in dem Keilbereich wird eine Last auf die Verbindung reduziert.

Aus Fig. 3 wie auch aus Fig. 5 heraus ist außerdem ersichtlich, dass eine Falllinie auf der oberen Seite des Grundkörpers von dem oberen Anbindungsbereich (Befestigungsstellen) hinab bis zu dem unteren Teil in einer Neigung leicht abnimmt und dann zu der Hartmetallspitze hin wieder zunimmt. Diese Kontur kann als S-förmig mit einem (einzigen) Wendepunkt bezeichnet werden.

Ebenfalls aus Fig. 3 heraus ist klar ersichtlich, dass die Schnittkanten der Hartmetallspitze 3 unterhalb der Schnittkanten der Hartmetallplättchen 2 in der Tiefenrichtung liegen. Gleichermaßen gilt, dass die Schnittkanten der Hartmetallspitze 3 weiter entfernt von den Befestigungsstellen 12 des Grundkörpers 1 entfernt sind als die Schnittkanten der Hartmetallplättchen 2. Außerdem lässt sich auf Fig. 3 bzw. Fig. 5 erkennen, dass der mittige Bereich 11a in Tiefenrichtung Z weiter unten liegt als die seitlichen Bereiche 11b des Keilbereichs 11 des Grundkörpers 1. Gleichermaßen gilt, dass die unterste Kante des mittigen Bereichs 11a in Tiefenrichtung Z tiefer (weiter unten) liegt als die unterste Kante des seitlichen Bereichs 11b. Auch hier gilt bezogen auf die Befestigungsstellen 12, dass die am weitesten von den Befestigungsstellen 12 entfernte Kante des mittigen Bereichs 11a weiter entfernt von den Befestigungsstellen 12 ist als die am weitesten entfernte Kante von den Befestigungsstellen 12 des seitlichen Bereichs 11b. Der Ausdruck "unten" bedeutet in diesem Zusammenhang "unten" in den Figuren, "unten" in einer Schwerkraftrichtung bzw. "unten", wenn die Schar betriebsbereit installiert ist. Während in der vorliegenden Ausführungsform, wie zum Beispiel in Fig. 5 zu sehen ist, die unteren Schnittkanten 21 unterhalb (tiefer in der Tiefenrichtung Z) der untersten Kante des seitlichen Bereichs 11b des Keilbereichs 11 des Grundkörpers 1 liegen, liegt die untere Kante des mittigen Bereichs 11a unterhalb (tiefer in der Tiefenrichtung Z) der Schnittkante 31 der Hartmetallspitze 3. An dieser Stelle sei vermerkt, dass auch die Schnittkante 31 bzw. die Spitze der Hartmetallspitze 3 unterhalb (tiefer in der Tiefenrichtung Z) der untersten Kante des mittigen Bereichs 11a des Keilbereichs 11 des Grundkörpers 1 liegen kann.

Fig. 4 zeigt eine perspektivische Ansicht der Schar, wobei in dieser Figur klar ersichtlich ist, dass sich die Hartmetallspitze der Ausführungsform auch in Bodenbearbeitungsrichtung X von den seitlichen Hartmetallblättchen 2 derart absetzen kann, dass die entsprechenden Schnittkanten 31, 21 einen Versatz aufweisen.

Fig. 5 zeigt einen Schnitt entlang Linie A-A, die in Fig. 1 zu sehen ist. Hieraus wird ersichtlich, dass der Grundkörper 1 ein gepresster bzw. geformter Körper ist. Die doppelte Linie zeigt, dass die unterste Kante der Hartmetallplättchen bzw. Schnittkanten 21 unterhalb der untersten Kante des seitlichen Bereichs 11b des Keilbereichs liegen. Außerdem lässt sich in Fig. 5 deutlich ein Ausschnitt bzw. eine Vertiefung in dem Grundkörper 1 bzw. in dessen mittigen Bereich 11a sehen, in der die Hartmetallspitze 3 eingelegt ist, um die Stützwirkung zu erhöhen und den Bodenwiderstand zu verringern.

Fig. 6 zeigt das Detail B, das in Fig. 5 gezeigt ist. In Fig. 5 und Fig. 6 ist klar ersichtlich, dass die Hartmetallspitze 3 flächig auf dem mittigen Bereich 11a des Keilbereichs 11 aufliegt. Die Hartmetallspitze 3 ist derart ausgebildet, dass die Schnittkante 31 in Bodenbearbeitungsrichtung X von der vorderen bzw. unteren Kante des mittigen Bereichs 11a in Bodenbearbeitungsrichtung X vorsteht. Außerdem ist ersichtlich, dass die Schnittkante 31 der Hartmetallspitze 3 oberhalb von der unteren vorderen Kante des mittigen Bereichs 11a zu liegen kommt. Auch hier sei nochmals vermerkt, dass diese Geometrie auch vorsehen könnte, dass die Schnittkante 31 unterhalb der unteren Kante des mittigen Bereichs 11a zu liegen kommt.

## Patentansprüche

1. Grubberschar mit:
einem Grundkörper (1) mit einem nach unten hin abfallenden und in Bodenbearbeitungsrichtung (X) vorstehenden Keilbereich (11), der in Bodenbearbeitungsrichtung (X) am vorderen Ende des Grundkörpers (1) angeordnet ist, wobei der Keilbereich (11) einen mittigen Bereich (11a) und einen seitlichen Bereich (11b) hat, der in einer Querrichtung (Y), die senkrecht zur Bodenbearbeitungsrichtung (X) ist, seitlich von dem mittigen Bereich (11a) angeordnet ist,
Hartmetallplättchen (2), die auf dem seitlichen Bereich (11b) des Keilbereichs (11) befestigt sind und eine Schnittkante (21) haben, und
einer Hartmetallspitze (3), die auf dem mittigen Bereich (11a) des Keilbereichs (11) befestigt ist und in Querrichtung (Y) mittig zur Bodenbearbeitungsrichtung (X) hin spitz zuläuft,
wobei das Grubberschar eine Gänsefußschar ist, und wobei
die Hartmetallspitze (3) auf beiden Seiten in der Querrichtung (Y) hinsichtlich einer Spitze Schnittkanten hat,
**dadurch gekennzeichnet, dass**
die Spitze und/oder die Schnittkanten der Hartmetallspitze (3) in einer Tiefenrichtung (Z), die senkrecht zur Bodenbearbeitungsrichtung (X) und senkrecht zur Querrichtung (Y) ist, weiter entfernt ist/sind von Befestigungsstellen (12) der Grubberschar als die Schnittkanten der Hartmetallplättchen (2) auf dem seitlichen Bereich (11b) des Keilbereichs (11), wobei die Hartmetallplättchen (2) derart nebeneinander angeordnet sind, dass sie eine durchgehende Schnittkante auf einer rechten und linken Seite des Grundkörpers (1) erzeugen.

2. Grubberschar nach Anspruch 1, wobei
die in einer Tiefenrichtung (Z), die senkrecht zur Bodenbearbeitungsrichtung (X) und senkrecht zur Querrichtung (Y) ist, am weitesten von Befestigungsstellen (12) der Grubberschar entfernte Kante des mittigen Bereichs (11a) des Keilbereichs (11) in der Tiefenrichtung (Z) weiter entfernt ist von den Befestigungsstellen (12) der Grubberschar als die in der Tiefenrichtung (Z) am weitesten von Befestigungsstellen (12) der Grubberschar entfernte Kante des seitlichen Bereichs (11b) des Keilbereichs (11).

3. Grubber-Schar nach Anspruch 1 oder Anspruch 2, wobei
die Schnittkanten der Hartmetallplättchen (2) in der Tiefenrichtung (Z) zumindest teilweise weiter entfernt sind von den Befestigungsstellen (12) der Grubberschar als die in der Tiefenrichtung (Z) am weitesten von Befestigungsstellen (12) der Grubberschar entfernte Kante des seitlichen Bereichs (11b) des Keilbereichs (11), und/oder
die Schnittkanten der Hartmetallspitze (3) in der Tiefenrichtung (Z) zumindest teilweise weiter entfernt sind von den Befestigungsstellen (12) der Grubberschar als die in der Tiefenrichtung (Z) am weitesten von Befestigungsstellen (12) der Grubberschar entfernte Kante des mittigen Bereichs (11a) des Keilbereichs (11).

4. Grubberschar nach einem von Ansprüchen 1 bis 3, wobei
eine Schnittfläche der Grubberschar in einer Ebene (XZ), die senkrecht zur Querrichtung (Y) ist und die Spitze der Hartmetallspitze (3) beinhaltet, im Bereich des mittigen Bereichs (11a) des Keilbereichs (11) einen Knick aufweist, sodass sich die darauf angebrachte Hartmetallspitze (3) stärker zur Tiefenrichtung (Z) hin neigt als Teil der Schnittfläche, der entgegen der Bodenbearbeitungsrichtung (X) benachbart zu dem mittigen Bereich (11a) des Keilbereichs (11) liegt.

5. Grubberschar nach einem von Ansprüchen 1 bis 4, wobei
der mittige Bereich (11a) des Keilbereichs (11) zum Inneren des Grundkörpers (1) hin einen abgestuften Bereich ausbildet, sodass die Hartmetallspitze (3) im Wesentlichen bündig in dem abgestuften Bereich aufgenommen wird.

6. Grubberschar nach einem von Ansprüchen 1 bis 5, wobei
eine Breite der Hartmetallspitze (3) in Querrichtung (Y) kleiner ist als eine Breite des Grundkörpers (1) in Bereich der Befestigungsstellen (12),
vorzugsweise ist Breite der Hartmetallspitze (3) in Querrichtung (Y) kleiner als oder gleich wie eine halbe Breite des Grundkörpers (1) in Bereich der Befestigungsstellen (12).

7. Grubberschar nach einem von Ansprüchen 1 bis 6, wobei
der mittige Bereich (11a) und der seitliche Bereich (11b) in der Querrichtung (Y) betrachtet mit der Bodenbearbeitungsrichtung (X) einen spitzen Winkel einschließen.

8. Grubberschar nach einem von Ansprüchen 1 bis 7, wobei der seitliche Bereich (11b), bezüglich des mittigen Bereichs (11a) entgegen der Bodenbearbeitungsrichtung (X) nach hinten versetzt angeordnet ist.

## Claims

1. Cultivator tine comprising:
a base body (1) having a wedge portion (11) sloping downwardly and projecting in a tillage direction (X) that is disposed at the front end of the base body (1) in the tillage direction (X), wherein the wedge portion (11) has a central portion (11a) and a lateral portion (11b) disposed laterally of the central portion (11a) in a transverse direction (Y) perpendicular to the tillage direction (X),
carbide plates (2) attached on the lateral portion (11b) of the wedge portion (11) and having a cutting edge (21), and
a carbide tip (3), which is attached on the central portion (11a) of the wedge portion (11) and tapers centrally towards the tillage direction (X) in the transverse direction (Y),
wherein the cultivator tine is a duckfoot tine, and wherein
the carbide tip (3) has cutting edges on both sides in the transverse direction (Y) with respect to a tip, **characterized in that**
the tip and/or the cutting edges of the carbide tip (3) is/are further away from attachment points (12) of the cultivator tine in a depth direction (Z), which is perpendicular to the tillage direction (X) and perpendicular to the transverse direction (Y), than the cutting edges of the carbide plates (2) on the lateral portion (11b) of the wedge portion (11), wherein the carbide plates (2) are arranged next to one another in such a way that they create a continuous cutting edge on a right and left side of the base body (1).

2. Cultivator tine according to claim 1, wherein
the edge of the central portion (11a) of the wedge portion (11), which is furthest away from attachment points (12) of the cultivator tine in a depth direction (Z), which is perpendicular to the tillage direction (X) and perpendicular to the transverse direction (Y), is further away from the attachment points (12) of the cultivator tine in the depth direction (Z) than the edge of the lateral portion (11b) of the wedge portion (11), which is furthest away from attachment points (12) of the cultivator tine in the depth direction (Z).

3. Cultivator tine according to claim 1 or claim 2, wherein
the cutting edges of the carbide plates (2) are at least partially further away from the attachment points (12) of the cultivator tine in the depth direction (Z) than the edge of the lateral portion (11b) of the wedge portion (11), which is furthest away from attachment points (12) of the cultivator tine in the depth direction (Z), and/or
the cutting edges of the carbide tip (3) are at least partially further away from the attachment points (12) of the cultivator tine in the depth direction (Z) than the edge of the central portion (11a) of the wedge portion (11), which is furthest away from attachment points (12) of the cultivator tine in the depth direction (Z).

4. Cultivator tine according to any one of claims 1 to 3, wherein
a cutting surface of the cultivator tine in a plane (XZ), which is perpendicular to the transverse direction (Y) and includes the tip of the carbide tip (3), has a kink in the portion of the central portion (11a) of the wedge portion (11), so that the carbide tip (3) attached thereto is inclined further towards the depth direction (Z) than part of the cutting surface, which is located, opposite to the tillage direction (X), adjacent to the central portion (11a) of the wedge portion (11).

5. Cultivator tine according to any one of claims 1 to 4, wherein
the central portion (11a) of the wedge portion (11) forms a stepped portion towards the interior of the base body (1), so that the carbide tip (3) is accommodated substantially flush in the stepped portion.

6. Cultivator tine according to any one of claims 1 to 5, wherein
a width of the carbide tip (3) in the transverse direction (Y) is smaller than a width of the base body (1) in a portion of the attachment points (12),
preferably, width of the carbide tip (3) in the transverse direction (Y) is less than or equal to half the width of the base body (1) in the portion of the attachment points (12).

7. Cultivator tine according to any one of claims 1 to 6, wherein
the central portion (11a) and the lateral portion (11b) form an acute angle with the tillage direction (X) when viewed in the transverse direction (Y).

8. Cultivator tine according to any one of claims 1 to 7, wherein the lateral portion (11b) is arranged offset to the rear, opposite to the tillage direction (X), with respect to the central portion (11a).

## Revendications

1. Soc de cultivateur comprenant :
un corps de base (1) ayant une zone en coin (11) inclinée vers le bas et faisant saillie dans la direction de travail du sol (X), agencée à l'extrémité avant du corps de base (1) dans la direction de travail du sol (X), la zone en coin (11) ayant une zone centrale (11a) et une zone latérale (11b) agencée latéralement par rapport à la zone centrale (11a) dans une direction transversale (Y) qui est perpendiculaire à la direction de travail du sol (X),
des plaques en métal dur (2) fixées sur la zone latérale (11b) de la zone en coin (11) et ayant un bord de coupe (21), et
une pointe en métal dur (3) qui est fixée sur la zone centrale (11a) de la zone en coin (11) et qui se termine en pointe dans la direction transversale (Y) au milieu de la direction de travail du sol (X),
le soc du cultivateur étant un soc en patte d'oie, et a pointe en métal dur (3) ayant des bords de coupe des deux côtés dans la direction transversale (Y) par rapport à une pointe, **caractérisé en ce que**
la pointe et/ou les bords de coupe de la pointe en métal dur (3) est/sont, dans une direction de profondeur (Z) qui est perpendiculaire à la direction de travail du sol (X) et perpendiculaire à la direction transversale (Y), plus éloignés des points de fixation (12) du soc du cultivateur que les bords de coupe des plaques de métal dur (2) sur la zone latérale (11b) de la zone en coin (11),
les plaques de métal dur (2) étant disposées côte à côte de telle sorte qu'elles forment un bord de coupe continu sur un côté droit et un côté gauche du corps de base (1).

2. Soc de cultivateur selon la revendication 1, dans lequel
le bord de la zone centrale (11a) de la zone en coin (11) le plus éloigné des points de fixation (12) du soc de cultivateur dans une direction de profondeur (Z), qui est perpendiculaire à la direction de travail du sol (X) et perpendiculaire à la direction transversale (Y), est plus éloigné des points de fixation (12) du soc de cultivateur dans la direction de profondeur (Z) que le bord de la zone latérale (11b) de la zone en coin (11) le plus éloigné des points de fixation (12) du soc de cultivateur dans la direction de profondeur (Z).

3. Soc de cultivateur selon la revendication 1 ou la revendication 2, dans lequel
les bords de coupe des plaques de métal dur (2) sont au moins partiellement plus éloignés des points de fixation (12) du soc de cultivateur dans la direction de la profondeur (Z) que le bord de la zone latérale (11b) de la zone en coin (11) qui est le plus éloigné des points de fixation (12) du soc de cultivateur dans la direction de la profondeur (Z), et/ou
les bords de coupe de la pointe en métal dur (3) sont, dans la direction de la profondeur (Z), au moins partiellement plus éloignés des points de fixation (12) du soc du cultivateur que le bord de la zone centrale (11a) de la zone en coin (11) le plus éloigné des points de fixation (12) du soc du cultivateur dans la direction de la profondeur (Z).

4. Soc de cultivateur selon l'une des revendications 1 à 3, dans lequel
une surface de coupe du soc de cultivateur dans un plan (XZ) qui est perpendiculaire à la direction transversale (Y) et qui contient la pointe de la pointe en métal dur (3) présente un coude dans la zone de la zone centrale (11a) de la zone en coin (11), de sorte que la pointe en métal dur (3) montée sur elle s'incline plus fortement vers la direction de la profondeur (Z) que la zone de la surface de coupe qui est adjacente à la zone centrale (11a) de la zone en coin (11) dans le sens contraire à la direction de travail du sol (X).

5. Soc de cultivateur selon l'une des revendications 1 à 4, dans lequel la zone centrale (11a) de la zone en coin (11) forme une zone étagée vers l'intérieur du corps de base (1), de sorte que la pointe en métal dur (3) est reçue sensiblement à fleur dans la zone étagée.

6. Soc de cultivateur selon l'une des revendications 1 à 5, dans lequel
une largeur de la pointe en métal dur (3) dans la direction transversale (Y) est inférieure à une largeur du corps de base (1) dans la zone des points de fixation (12),
de préférence, la largeur de la pointe en métal dur (3) dans la direction transversale (Y) est inférieure ou égale à la moitié de la largeur du corps de base (1) dans la zone des points de fixation (12).

7. Soc de cultivateur selon l'une des revendications 1 à 6, dans lequel
la zone centrale (11a) et la zone latérale (11b), vues dans la direction transversale (Y), forment un angle aigu avec la direction de travail du sol (X).

8. Soc de cultivateur selon l'une des revendications 1 à 7, dans lequel la zone latérale (11b) est décalée vers l'arrière par rapport à la zone centrale (11a) dans le sens opposé au sens de travail du sol (X).
